# FASCICULE DE BREVET EUROPEEN

(11) **EP 2 066 512 B1**
(45) Date de publication et mention de la délivrance du brevet: **03.08.2011**
(21) Numéro de dépôt: 07848332.8
(22) Date de dépôt: 18.09.2007
(51) Int. Cl.: B60J 5/10, B60J 10/08

(54) **OUVRANT ARRIERE DE VEHICULE AUTOMOBILE**
RÜCKWÄRTIGE ÖFFNUNG FÜR EIN AUTOMOBIL
BACK OPENING FOR AN AUTOMOTIVE VEHICLE

(30) Priorité: 20.09.2006 FR 0653850
(43) Date de publication de la demande: 10.06.2009
(73) Titulaire: Inoplast, 07100 Annonay (FR)
(72) Inventeur: HACHE, Bertrand, F-07430 Saint Cyr (FR)
(74) Mandataire: Remy, Vincent Noel Paul
(86) Numéro de dépôt international: PCT/FR2007/051960
(87) Numéro de publication internationale: WO 2008/035005

(56) Documents cités:
- WO-A-2005/042287
- FR-A1- 2 849 807
- US-A1- 2005 253 406

## Description

La présente invention concerne un ouvrant arrière pour véhicule automobile.

Il est connu de l'état de la technique un ouvrant arrière présentant au moins deux modes d'ouverture différents pour accéder à l'intérieur du véhicule. Un tel ouvrant comprend généralement un cadre, fixé sur la caisse, et une porte, fixée sur le cadre. La cadre est mobile autour d'un premier axe par rapport à la caisse et permet d'utiliser l'ouvrant selon un premier mode d'ouverture par pivotement autour de ce premier axe. La porte est, elle, mobile autour d'un second axe par rapport au cadre et permet d'utiliser l'ouvrant selon un second mode d'ouverture par pivotement autour de ce deuxième axe. Ces deux modes d'ouverture facilitent l'utilisation de l'ouvrant, en particulier lorsqu'un des deux modes est inutilisable par manque d'espace autour de l'arrière du véhicule. Un tel ouvrant est décrit dans le document WO 2005/042287.

Un problème posé par cet état de la technique, entre autres, est celui de l'étanchéité. En effet, un tel ouvrant nécessite de prévoir deux organes d'étanchéité sur le véhicule. Un premier organe est agencé de façon à assurer une première liaison étanche entre la porte et le cadre lorsque la porte est en position fermée. Un second organe est agencé de façon à assurer une seconde liaison étanche entre le cadre et la caisse du véhicule lorsque le cadre est en position fermée. Un tel empilement d'organes d'étanchéité conduit souvent à des positionnements complexes, ce qui engendre une augmentation des coûts de fabrication.

L'invention a notamment pour but de fournir un ouvrant arrière permettant de fabriquer le véhicule à moindre coût tout en conservant la possibilité d'utiliser l'ouvrant selon au moins deux modes d'ouverture différents.

A cet effet, l'invention a pour objet un ouvrant arrière pour véhicule automobile, le véhicule comprenant une caisse, la caisse présentant un anneau arrière de caisse délimitant une ouverture de caisse, l'ouvrant comprenant :
- un cadre comportant des moyens de fixation du cadre sur la caisse, le cadre étant monté mobile sur la caisse entre une position fermée et une position ouverte ;
- une porte comportant des moyens de fixation de la porte sur le cadre, la porte étant montée mobile sur le cadre entre une position fermée et une position ouverte ;
- un organe d'étanchéité séparant de façon étanche l'intérieur et l'extérieur du véhicule,
   caractérisé en ce que l'organe d'étanchéité est agencé de façon à assurer une liaison étanche entre la porte et l'anneau arrière de caisse lorsque la porte et le cadre sont en positions fermées.

Ainsi, un tel ouvrant permet d'utiliser un seul organe d'étanchéité tout en conservant la possibilité d'utiliser l'ouvrant selon au moins deux modes d'ouverture différents. Cet ouvrant assure efficacement l'étanchéité du véhicule de manière simplifiée par rapport au cas dans lequel deux organes d'étanchéité sont nécessaires.

On entend par « position fermée du cadre », une position nécessaire mais pas suffisante pour obturer l'ouverture de caisse, position dans laquelle le cadre est globalement superposé à l'anneau arrière de caisse. On entend par « position ouverte du cadre », une position suffisante pour libérer l'accès à l'ouverture de caisse, position dans laquelle le cadre est décalé par rapport à l'anneau arrière de caisse. Les termes « position fermée de la porte » et « position ouverte de la porte » sont utilisés pour désigner les deux positions classiques d'une porte.

Ainsi, on comprend que la porte en position fermée obture l'ouverture de caisse si et seulement si le cadre est en position fermée. On comprend également que la porte en position ouverte laisse libre l'accès à l'ouverture de caisse quelle que soit la position, ouverte ou fermée, du cadre. On peut illustrer les différentes positions par le tableau ci-dessous :

| | **Cadre en position fermée** | **Cadre en position ouverte** |
|---|---|---|
| **Porte en position fermée** | Ouverture de caisse obturée | Ouverture de caisse libre |
| **Porte en position ouverte** | Ouverture de caisse libre | Ouverture de caisse libre |

Par ailleurs, dans la suite, on désigne la direction longitudinale comme étant la direction de déplacement du véhicule, la direction transversale comme étant la direction horizontale et perpendiculaire à la direction longitudinale, la direction verticale comme étant la direction perpendiculaire aux directions longitudinale et transversale.

L'invention peut en outre comporter une ou plusieurs caractéristiques suivantes :
- Les moyens de fixation du cadre sur la caisse et/ou de la porte sur le cadre sont des charnières. Ainsi, les charnières de la porte fixée sur le cadre permettent de faire pivoter la porte par rapport au cadre autour d'un premier axe. L'ouverture de caisse est alors libérée selon un premier mode d'ouverture. De manière analogue, les charnières du cadre fixé sur la caisse permettent de faire pivoter le cadre par rapport à la caisse autour d'un second axe. L'ouverture de caisse est alors libérée selon un second mode d'ouverture. Avantageusement, les premier et second axes pourront être sensiblement perpendiculaires l'un par rapport à l'autre, le premier axe étant par exemple vertical et le second transversal. Aussi, on pourra utiliser l'ouvrant selon le mode vertical ou selon un mode horizontal.
- La porte comprend une peau extérieure et une peau intérieure, la peau intérieure étant en matériau composite, en particulier du SMC (Sheet Molding Compound). On désigne par peau intérieure la paroi de la porte qui fait essentiellement face à l'intérieur du véhicule. La peau extérieure désigne, quant à elle, la paroi de la porte qui fait essentiellement face à l'extérieur du véhicule. L'utilisation du matériau composite pour la réalisation de la peau intérieure procure un avantage pondéral par rapport aux matériaux utilisés classiquement tel que l'acier.
- La peau intérieure de la porte est conformée de façon à loger le cadre et éventuellement les moyens de fixation du cadre sur la caisse et de la porte sur le cadre. On sait que le cadre et les moyens de fixation sont des éléments encombrants de l'ouvrant. Grâce à une peau intérieure en matériau composite, matériau dont la mise en forme est aisée, il est très facile de réaliser un logement, ce qui est plus difficile avec un matériau classique comme une tôle, cas dans lequel il faudrait souder plusieurs pièces entre elles. En outre, l'utilisation de matériau composite permet de ménager facilement des nervures sur la peau intérieure afin de rigidifier la porte. Enfin, les contraintes d'agencement pouvant être concentrées sur la peau intérieure, on peut également envisager une peau extérieure en tôle classique, fixée sur une peau intérieure en composite.
- L'organe d'étanchéité séparant de façon étanche l'intérieur du véhicule, appelé zone sèche, et l'extérieur du véhicule, appelé zone humide, le cadre est placé intégralement en zone humide. Il en ressort qu'il est beaucoup plus aisé d'assurer l'étanchéité de la partie arrière du véhicule. En effet, comme le cadre est intégralement placé en zone humide, il n'est pas nécessaire d'assurer sa liaison étanche avec la caisse ; seule la liaison étanche entre la porte et la caisse doit être assurée. Ainsi, l'agencement du cadre et des moyens de fixation n'est pas du tout contraint par des problèmes d'étanchéité. En particulier, toutes les étapes cinématiques de l'ouvrant exécutées par le cadre et les moyens de fixation sont assurées en zone humide.
- Le cadre comprend de l'aluminium ou un matériau composite. L'utilisation de tels matériaux pour la réalisation des portes et/ou du cadre procure un avantage pondéral par rapport aux matériaux utilisés classiquement tel que l'acier.
- Le cadre présente une surface d'appui coopérant avec une surface de reprise d'effort de la caisse lorsque le cadre est en position fermée. Ainsi, la reprise des efforts du cadre par la caisse n'est pas assurée uniquement par les moyens de fixation du cadre sur la caisse mais également par cette surface d'appui. Une telle reprise d'effort ne serait pas possible dans le cas où la liaison entre le cadre et la caisse, hors liaison assurée par les organes de fixation du cadre sur la caisse, est assurée par un organe dont la fonction principale est d'assurer l'étanchéité.
- La porte comprend plusieurs panneaux sur lesquels sont fixés des organes d'étanchéité complémentaires agencés de façon à assurer une liaison étanche entre deux panneaux voisins lorsque la porte est en position fermée. En particulier, la porte comprend deux panneaux qui coopèrent entre eux selon un axe sensiblement vertical. Cet organe d'étanchéité complémentaire entre les panneaux permet ainsi de maintenir la séparation entre la zone sèche et la zone humide.
- L'ouvrant comprend des moyens de verrouillage du cadre sur la caisse et/ou des moyens de verrouillage de la porte ou de ses panneaux sur le cadre. De tels moyens permettent deux modes de verrouillage, éventuellement indépendants de l'ouvrant. Ainsi, on peut verrouiller seulement le cadre ou seulement la porte ou ses panneaux.

L'invention sera mieux comprise à la lumière de la description qui va suivre, donnée uniquement à titre d'exemple non limitatif et faite en se référant aux dessins dans lesquels :
- la figure 1 est une vue schématique en perspective éclatée d'un ouvrant arrière pour véhicule automobile selon l'invention ;
- la figure 2 est une vue partielle en coupe selon le plan longitudinal (X ; Z) de l'ouvrant de la figure 1 ;
- la figure 3 est une vue partielle en coupe selon le plan longitudinal (Y ; X) de l'ouvrant de la figure 1 ;
- la figure 4 est une vue partielle en coupe selon le plan longitudinal (Z ; X) de l'ouvrant de la figure 1 ;
- la figure 5 est une vue partielle en coupe selon le plan longitudinal (Y ; X) de l'ouvrant de la figure 1.

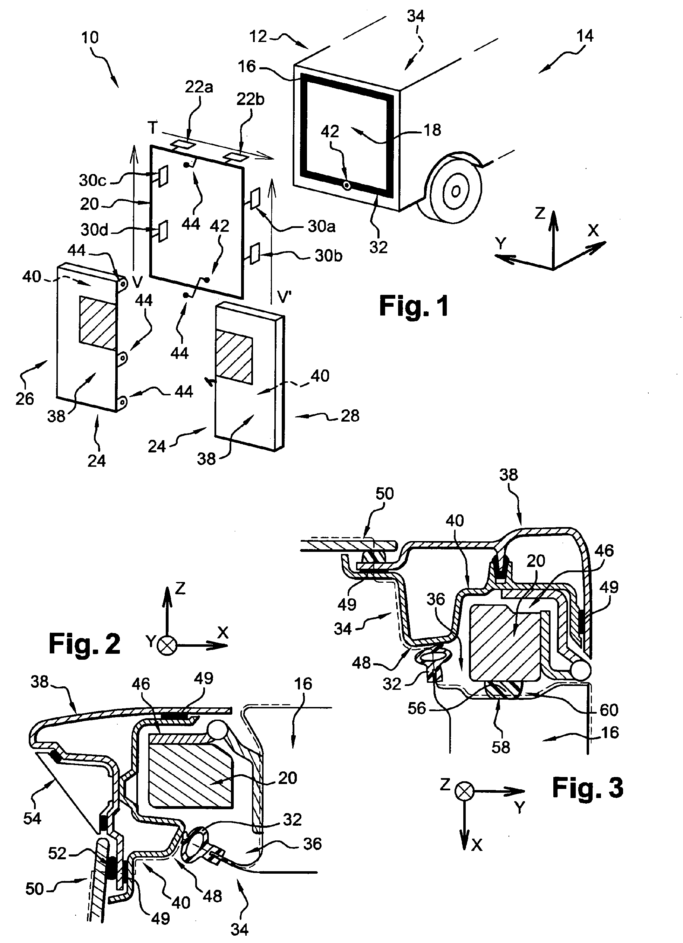

On a représenté schématiquement sur la figure 1, un ouvrant arrière pour véhicule automobile selon l'invention, désigné par la référence générale 10.

L'ouvrant arrière 10 est monté sur une caisse 12 d'un véhicule automobile 14. La caisse 12 présente un anneau arrière 16 de caisse délimitant une ouverture de caisse 18.

Un cadre 20 est monté mobile sur la caisse 12, grâce à des moyens de fixation 22 du cadre 20 sur la caisse 12, entre une position fermée et une position ouverte du cadre 20. Le cadre 20 forme un périmètre fermé. Le périmètre a une forme sensiblement rectangulaire.

Une porte 24 composée d'un ou plusieurs panneaux, ici deux panneaux 26 et 28, est montée mobile sur le cadre 20, grâce à des moyens de fixation 30 de la porte 24 sur le cadre 20, entre une position fermée et une position ouverte de la porte 24.

Plus précisément, le cadre 20 est monté pivotant autour d'un axe transversal T supérieur, au moyen de charnières 22a et 22b, et les panneaux 26, 28 sont montés pivotants autour de deux axes verticaux V, V' latéraux, au moyen de charnières 30a et 30b. Les charnières 22a, 22b sont fixées sur un contour de la caisse 12 et sur le cadre 20. Les charnières 30a, 30b sont fixées sur un contour du cadre 20 et sur les panneaux 26 et 28.

Un organe d'étanchéité 32, en l'espèce un joint à écrasement, sépare de façon étanche l'intérieur du véhicule 34, appelé zone sèche, et l'extérieur du véhicule 36, appelé zone humide. Une ligne pointillée symbolise la séparation entre ces deux zones.

L'organe d'étanchéité 32 est agencé de façon à assurer une liaison étanche entre la porte 24 et l'anneau arrière de caisse lorsque la porte 24 et le cadre 20 sont en positions fermées.

En l'espèce, l'organe 32 est monté sur l'anneau arrière de caisse. Alternativement, il peut être monté sur la porte 24.

Chacun des panneaux présente une peau extérieure 38 faisant essentiellement face à l'extérieur 36 du véhicule et une peau intérieure 40 faisant essentiellement face à l'intérieur 34 du véhicule.

Des moyens de verrouillage 42 de type classique du cadre 20 sur la caisse 12 sont ici positionnés sur la caisse 12 et le cadre 20. Des moyens de verrouillage 44 des panneaux de la porte 24 sur le cadre 20 sont, quant à eux, disposés sur les panneaux de la porte 24 et le cadre 20.

On a représenté sur la figure 2, l'une des charnières 22a ou 22b fixant le cadre 20 sur la caisse 12.

L'ouvrant 10 est ici représenté en position fermée.

L'organe d'étanchéité 32 assure la liaison étanche entre les peaux intérieures 40 de la porte 24 et l'anneau arrière de caisse 16.

Chaque peau intérieure 40 est en matériau composite, plus précisément en SMC. Un tel matériau permet la conformation de la peau intérieure 40 de façon à loger le cadre 20 et les moyens de fixation 22a, 22b. En effet, comme on peut le voir sur la figure 2, la peau intérieure 40 présente un profil définissant d'une part un espace de logement 46 du cadre 20 et des charnières 22a, 22b, et d'autre part une surface de contact 48 avec l'organe d'étanchéité 32. Dans le cas représenté, l'espace de logement 46 est défini par un renfoncement et la surface de contact 48 par une saillie.

Chaque peau intérieure 40 et extérieure 38 sont assemblées par des techniques connues, par exemple par sertissage, collage ou vissage. Dans le cas représenté, les peaux 40, 38 sont collées ensemble, les collages 49 assurant l'étanchéité à l'intérieur de l'espace délimité par les peaux.

Le cadre 20 est réalisé en aluminium. Il est alternativement en matériau composite si la section du cadre 20 est suffisamment grande et le matériau composite suffisamment résistant pour supporter les forces qui s'appliquent sur le cadre 20. Comme on peut le constater, l'organe d'étanchéité 32 sépare une zone humide 36 d'une zone sèche 34 du véhicule 14, et le cadre 20 est placé en zone humide 36.

Chaque panneau comprend en outre une vitre en verre 50. Cette vitre est collée sur la peau extérieure 38 de chaque panneau, les collages 52 formant une barrière étanche entre la zone sèche 34 et la zone humide 36 du véhicule 14. La porte 24 comprend également des éléments de signalisation routière, comme un feu de stop 54.

On a représenté sur la figure 3, l'une des charnières fixant un panneau 26 de porte sur le cadre 20. L'ouvrant 10 est également représenté en position fermé.

Le cadre 20 présente une surface 56 d'appui qui coopère avec une surface 58 de reprise d'effort de l'anneau arrière 16 lorsque le cadre 20 est en position fermée. Cette surface d'appui 56 peut être une surface du cadre 20 lui-même. Elle peut être une surface d'un élément complémentaire, une butée 60 par exemple, fixée sur le cadre 20, comme représenté ici sur la figure 3.

Le profil remarquable de la peau intérieure 40 est sensiblement identique à celui décrit à la figure précédente. Dans le cas représenté, les charnières 30a, 30b, 30c, 30d sont fixées aux panneaux 26, 28 dans la partie de la peau intérieure 40 dont le profil définit l'espace de logement 46.

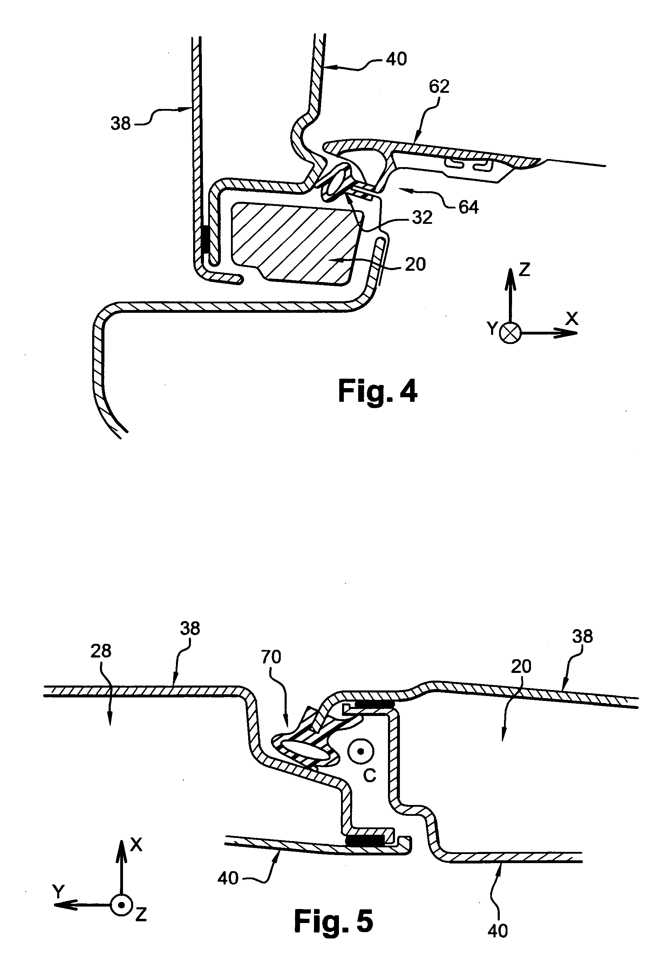

Comme on peut le voir sur la figure 4, des moyens 62 de protection de l'organe d'étanchéité 32 surplombent la partie de l'organe d'étanchéité 32 qui est positionnée sur la partie 64 interne inférieure de l'anneau de caisse 16 du véhicule de façon à la recouvrir.

Comme on peut le voir sur la figure 5, les panneaux de porte coopèrent entre eux selon un axe vertical C par l'intermédiaire d'un organe d'étanchéité complémentaire 70, par exemple un joint à écrasement. Ce dernier est agencé de façon à assurer la liaison étanche entre deux panneaux 26, 28 voisins lorsque ceux-ci sont en position fermée.

Les principaux aspects du fonctionnement de l'ouvrant selon l'invention vont à présent être décrits.

Si l'on souhaite ouvrir l'ouvrant en mode horizontal, on désactive les moyens de verrouillage 42 du cadre 20 sur la caisse 12, de façon à désolidariser une partie du cadre 20 de la caisse 12. Les charnières 22a, 22b fixant le cadre 20 sur la caisse 12 permettent de faire pivoter le cadre 20 autour d'un axe transversal T. L'organe d'étanchéité 32 n'assure alors plus la liaison entre la porte 24 et l'anneau arrière de caisse 16. Ainsi quelle que soit la position de la porte 24, on libère l'accès à l'ouverture de caisse 18.

Si l'on souhaite utiliser l'ouvrant en mode vertical, on désactive les moyens de verrouillage 44 des panneaux de la porte 24 sur le cadre 20, de façon à désolidariser une parties des panneaux 26, 28 du cadre 20. Les charnières 30a, 30b, 30c, 30d fixant la porte 24 sur le cadre 20 permettent de faire pivoter chacun des panneaux 26 et 28 autour d'un axe vertical. L'organe d'étanchéité 32 n'assure alors plus la liaison étanche entre la porte 24 et l'anneau arrière de caisse 16. On libère l'accès à l'ouverture de caisse.

Parmi les avantages de l'invention, on notera que celle-ci permet de simplifier la mise en oeuvre de l'étanchéité au sein de l'ouvrant 10 en utilisant, notamment, un seul organe d'étanchéité 32 tout en conservant la possibilité d'utiliser l'ouvrant selon au moins deux modes d'ouverture différents.

On notera enfin que l'invention ne se limite pas aux modes de réalisation précédemment décrits.

En effet, les moyens de fixation 22, 30 du cadre 20 sur la caisse 12 et de la porte 24 sur le cadre 20 pourraient être des moyens de guidage verticaux ou transversaux, par exemple des glissières.

L'ouvrant peut comporter plus de deux panneaux 26, 28 de porte montés mobiles sur le cadre 20 par des moyens de fixation 22, 30 identiques ou différents. Ainsi, on pourra avoir un ouvrant 10 qui selon l'invention, comprend un cadre 20 monté pivotant au moyen de charnières 22 sur la caisse 12 et deux panneaux 26, 28 de porte montés coulissants sur la cadre 20 au moyen de deux glissières. On pourra également avoir un ouvrant 10 comprenant trois panneaux de porte montés pivotants sur le cadre 20.

L'ouvrant 10 peut également comporter des organes fonctionnels tels qu'un dispositif d'éclairage de plaque, des dispositif de signalisation ou des phares, des capteurs de distance, un moyen de protection des chocs ou encore des serrures de contrôle des organes de verrouillage.

## Revendications

1. Ouvrant arrière (10) pour véhicule automobile (14), le véhicule (14) comprenant une caisse (12), la caisse (12) présentant un anneau arrière de caisse (16) délimitant une ouverture de caisse (18), l'ouvrant (10) comprenant :
- un cadre (20) comportant des moyens de fixation (22) du cadre (20) sur la caisse (12), le cadre (20) étant monté mobile sur la caisse (12) entre une position fermée et une position ouverte ; .
- une porte (24) comportant des moyens de fixation (30) de la porte (24) sur le cadre (20), la porte (24) étant montée mobile sur le cadre (20) entre une position fermée et une position ouverte ;
- un organe d'étanchéité (32) séparant de façon étanche l'intérieur (34) et l'extérieur (36) du véhicule (14),
**caractérisé en ce que** l'organe d'étanchéité (32) est agencé de façon à assurer une liaison étanche entre la porte (24) et l'anneau arrière (16) de caisse lorsque la porte (24) et le cadre (20) sont en positions fermées.

2. Ouvrant arrière (10) pour véhicule automobile (14) selon la revendication 1, dans lequel les moyens de fixation (22, 30) du cadre (20) sur la caisse (12) et/ou de la porte (24) sur le cadre (20) sont des charnières (22a, 22b, 30a, 30b, 30c, 30d).

3. Ouvrant arrière (10) pour véhicule automobile (14) selon la revendication 1 ou 2, dans lequel la porte (24) comprend une peau extérieure (38) et une peau intérieure (40), la peau intérieure (40) étant en matériau composite, en particulier du SMC.

4. Ouvrant arrière (10) pour véhicule automobile (14) selon l'une quelconque des revendications précédentes, dans lequel la peau intérieure (40) de la porte (24) est conformée de façon à loger le cadre (20) et éventuellement les moyens de fixation (22, 30) du cadre (20) sur la caisse (12) et de la porte (24) sur le cadre (20).

5. Ouvrant arrière (10) pour véhicule automobile (14) selon l'une quelconque des revendications précédentes, dans lequel l'organe d'étanchéité (32) séparant de façon étanche l'intérieur (34) du véhicule, appelé zone sèche, et l'extérieur (36) du véhicule (14), appelé zone humide, le cadre (20) est intégralement placé en zone humide (36).

6. Ouvrant arrière (10) pour véhicule automobile (14) selon l'une quelconque des revendications précédentes, dans lequel le cadre (20) comprend de l'aluminium ou un matériau composite.

7. Ouvrant arrière (10) pour véhicule automobile (14) selon l'une quelconque des revendications précédentes, dans lequel le cadre (20) présente une surface d'appui (56) coopérant avec une surface de reprise d'effort (58) de la caisse 12 lorsque le cadre (20) est en position fermée.

8. Ouvrant arrière (10) pour véhicule automobile (14) selon l'une quelconque des revendications précédentes, dans lequel la porte (24) comprend plusieurs panneaux (26, 28), sur lesquels sont fixés des organes d'étanchéité complémentaires (70) agencés de façon à assurer une liaison étanche entre deux panneaux (26, 28) voisins lorsque la porte (24) est en position fermée.

9. Ouvrant arrière (10) pour véhicule automobile (14) selon la revendication précédente, dans lequel deux panneaux (26, 28) coopèrent entre eux selon un axe vertical (C).

10. Ouvrant arrière (10) pour véhicule automobile (14) selon l'une quelconque des revendications précédentes, comprenant des moyens de verrouillage (42) du cadre (20) sur la caisse (12) et/ou des moyens de verrouillage (44) de la porte (24) ou des panneaux (26,28) sur le cadre (20).

## Claims

1. Rear door (10) for a motor vehicle (14), the vehicle (14) having a body (12), the body (12) presenting a rear body ring (16) defining a body opening (18), the door (10) comprising:
• a frame (20) having fastener means (22) for fastening the frame (20) to the body (12), the frame (20) being movably mounted on the body (12) to move between a closed position and an open position;
• a door member (24) having fastener means (30) for fastening the door (24) to the frame (20), the door member (24) being movably mounted on the frame (20) to move between a closed position and an open position;
• a sealing member (32) separating the inside (34) and the outside (36) of the vehicle (14) in leaktight manner;
**characterized in that** the sealing member (32) is arranged in such a manner as to provide a leaktight connection between the door member (24) and the rear ring (16) of the body when the door member (24) and the frame (20) are in the closed position.

2. Rear door (10) for a motor vehicle (14) according to claim 1, wherein the fastener means (22, 30) for fastening the frame (20) to the body (12) and/or the door member (24) to the frame (20) are hinges (22a, 22b, 30a, 30b, 30c, 30d).

3. Rear door (10) for a motor vehicle (14) according to claim 1 or claim 2, wherein the door member (24) has an outer skin (38) and an inner skin (40), the inner skin (40) being made of a composite material, in particular of SMC.

4. Rear door (10) for a motor vehicle (14) according to any preceding claim, wherein the inner skin (40) of the door member (24) is shaped in such a manner as to house the frame (20) and optionally the fastener means (22, 30) for fastening the frame (20) to the body (12) and the door member (24) to the frame (20).

5. Rear door (10) for a motor vehicle (14) according to any preceding claim, wherein, with the sealing member (32) separating the inside (34) of the vehicle, referred to as the dry zone, in leaktight manner from the outside (36) of the vehicle (14), referred to as the wet zone, the frame (20) is placed completely in the wet zone (36).

6. Rear door (10) for a motor vehicle (14) according to any preceding claim, wherein the frame (20) comprises aluminum or a composite material.

7. Rear door (10) for a motor vehicle (14) according to any preceding claim, wherein the frame (20) presents a bearing surface (56) that co-operates with a force take-up surface (58) of the body (12) when the frame (20) is in the closed position.

8. Rear door (10) for a motor vehicle (14) according to any preceding claim, wherein the door member (24) comprises a plurality of panels (26, 28) having complementary sealing members (70) fastened thereto, the sealing members being arranged in such a manner as to provide a leaktight connection between two adjacent panels (26, 28) when the door member (24) is in the closed position.

9. Rear door (10) for a motor vehicle (14) according to the preceding claim, wherein two panels (26, 28) cooperate with each other about a vertical axis (C).

10. Rear door (10) for a motor vehicle (14) according to any preceding claim, including means (42) for locking the frame (20) to the body (12) and/or means (44) for locking the door member (24) or the panels (26, 28) to the frame (20).

## Patentansprüche

1. Rückwärtige Öffnungsanordnung (10) für Kraftfahrzeug (14), wobei das Fahrzeug (14) eine Karosserie (12) aufweist, wobei die Karosserie (12) einen rückwärtigen Ring der Karosserie (16) bildet, der eine Karosserieöffnung (18) begrenzt, wobei die Öffnungsanordnung (10) Folgendes aufweist:
- einen Rahmen (20), der Mittel zur Befestigung (22) des Rahmens (20) an der Karosserie (12) aufweist, wobei der Rahmen (20) an der Karosserie (12) beweglich zwischen einer geschlossenen Position und einer offenen Position angebracht ist;
- eine Tür (24), die Mittel zur Befestigung (30) der Tür (24) an dem Rahmen (20) aufweist, wobei die Tür (24) an dem Rahmen (20) beweglich zwischen einer geschlossenen Position und einer offenen Position angebracht ist;
- ein Dichtungsorgan (32), das das Innere (34) und das Äußere (36) des Fahrzeugs (14) auf dichte Weise trennt,
**dadurch gekennzeichnet, dass** das Dichtungsorgan (32) auf eine Weise gestaltet ist, dass eine dichte Verbindung zwischen der Tür (24) und dem rückwärtigen Ring (16) der Karosserie gewährleistet ist, wenn sich die Tür (24) und der Rahmen (20) in geschlossenen Positionen befinden.

2. Rückwärtige Öffnungsanordnung (10) für Kraftfahrzeug (14) nach Anspruch 1, wobei es sich bei den Mitteln zur Befestigung (22, 30) des Rahmens (20) an der Karosserie (12) und/oder der Tür (24) an den Rahmen (20) um Scharniere (22a, 22b, 30a, 30b, 30c, 30d) handelt.

3. Rückwärtige Öffnungsanordnung (10) für Kraftfahrzeug (14) nach Anspruch 1 oder 2, wobei die Tür (24) eine Außenhaut (38) und eine Innenhaut (40) aufweist, wobei die Innenhaut (40) aus einem Verbundwerkstoff, insbesondere SMC, besteht.

4. Rückwärtige Öffnungsanordnung (10) für Kraftfahrzeug (14) nach irgendeinem der vorhergehenden Ansprüche, wobei die Innenhaut (40) der Tür (24) angepasst ist, um den Rahmen (20) und gegebenenfalls die Mittel zur Befestigung (22, 30) des Rahmens (20) an der Karosserie (12) und der Tür (24) an dem Rahmen (20) aufzunehmen.

5. Rückwärtige Öffnungsanordnung (10) für Kraftfahrzeug (14) nach irgendeinem der vorhergehenden Ansprüche, wobei das Dichtungsorgan (32) das Innere (34) des Fahrzeugs, Trockenbereich genannt, und das Äußere (36) des Fahrzeugs (14), Nassbereich genannt, auf dichte Weise trennt, wobei der Rahmen (20) vollständig im Nassbereich (36) angebracht ist.

6. Rückwärtige Öffnungsanordnung (10) für Kraftfahrzeug (14) nach irgendeinem der vorhergehenden Ansprüche, wobei der Rahmen (20) Aluminium oder einen Verbundwerkstoff aufweist.

7. Rückwärtige Öffnungsanordnung (10) für Kraftfahrzeug (14) nach irgendeinem der vorhergehenden Ansprüche, wobei der Rahmen (20) eine Anlagefläche (56) aufweist, die mit einer Lastaufnahmeoberfläche (58) der Karosserie (12) zusammenwirkt, wenn sich der Rahmen (20) in geschlossener Position befindet.

8. Rückwärtige Öffnungsanordnung (10) für Kraftfahrzeug (14) nach irgendeinem der vorhergehenden Ansprüche, wobei die Tür (24) mehrere Platten (26, 28) aufweist, an denen zusätzliche Dichtungsorgane (70) befestigt sind, die gestaltet sind, um eine dichte Verbindung zwischen zwei benachbarten Platten (26, 28) zu gewährleisten, wenn sich die Tür (24) in geschlossener Position befindet.

9. Rückwärtige Öffnungsanordnung (10) für Kraftfahrzeug (14) nach dem vorhergehenden Anspruch, wobei zwei Platten (26, 28) untereinander entlang einer vertikalen Achse (C) zusammenwirken.

10. Rückwärtige Öffnungsanordnung (10) für Kraftfahrzeug (14) nach irgendeinem der vorhergehenden Ansprüche, die Mittel zum Verriegeln (42) des Rahmens (20) an der Karosserie (12) und/oder Mittel zum Verriegeln (44) der Tür (24) oder der Platten (26, 28) an dem Rahmen (20) aufweist.
